# EUROPEAN PATENT SPECIFICATION

(11) **EP 1 073 552 B1**
(45) Date of publication and mention of the grant of the patent: **08.01.2003**
(21) Application number: 99920654.3
(22) Date of filing: 13.04.1999
(51) Int. Cl.: B29C 45/46

(54) **PACKAGING FOR ENCAPSULATING MATERIAL**
VERPACKUNG FÜR EINKAPSELUNGSMATERIAL
EMBALLAGE DE MATIERE D'ENROBAGE

(30) Priority: 17.04.1998 NL 1008924; 06.11.1998 NL 1010503
(43) Date of publication of application: 07.02.2001
(73) Proprietor: "3P" Licensing B.V., 6902 PA Zevenaar (NL)
(72) Inventor: STIJNMAN, Paulus, Wilhelmus, Adrianus, NL-6904 PZ Zevenaar (NL)
(74) Representative: Bakkum, Ruben Joseph
(86) International application number: EP9902479
(87) International publication number: WO99054110

(56) References cited:
- EP-A- 0 730 937
- EP-A- 0 742 586
- EP-A- 0 747 942
- EP-A- 0 747 943
- PATENT ABSTRACTS OF JAPAN vol. 97, no. 9, 30 September 1997 (1997-09-30) & JP 09 117931 A (TOWA KK), 6 May 1997 (1997-05-06)
- PATENT ABSTRACTS OF JAPAN vol. 98, no. 11, 30 September 1998 (1998-09-30) & JP 10 172996 A (M TEX MATSUMURA KK), 26 June 1998 (1998-06-26)

## Description

The present invention relates to packagings comprising at least two films which wrap a volume of encapsulating material.

Packagings of this nature are generally known in the prior art. They are used in particular for encapsulating electronic components by transfer molding. Transfer molding is a technique in which a predetermined volume of encapsulating material is pressed out of a displacement chamber, via runners, into cavities of a mold. The encapsulating material used often is a thermosetting plastic, for example a reaction-curable resin. Such materials are relatively harmful to the environment. Therefore it is preferred to accommodate such a material in such packaging.

The displacement chamber is usually a piston chamber "pot" in which a plunger can be displaced. By placing the packaging in a piston chamber, the encapsulating material can be pressed out of the piston chamber with the aid of the plunger.

The two films of the packaging form at least one, preferably two, two-layer film flap through which, during the process of transfer molding, the encapsulating material flows into the runners and cavities of the mold. The encapsulating material is often a material which exhibits very good adhesion to the surfaces of the displacement chamber, the runners and the like. Therefore it is an advantage of using such packaging because these surfaces are covered by the films of the packaging.

The two films are connected by closure seams and film seams which are for example produced by welding, hot melting or with the aid of an adhesive. The film seams are made in such a manner that during the process of molding they become detached so that the encapsulating material can flow out of the packaging between the first and second films of the film flap.

During production of the seams, in particular during production of the closure seams, stress is introduced into the film material. The undesired stress is located substantially in the vicinity of the closure seams. As a result deformations, such as creases and corrugations, may occur in the film flaps near these locations. These deformations can represent a considerable obstacle to the flow of the pressurized encapsulating material. This can lead to uneven delivery of the encapsulating material and unevenly filled cavities in the mold. In serious cases, this may even lead to blockage of the runners of the cavities, with the result that in that event the cavities may even remain entirely empty. Uneven delivery must always be avoided, because the components to be encapsulated, for example ICs, are extremely sensitive components which can easily be damaged by uneven transfer of the encapsulating material. All this represents a very considerable problem, to which hitherto no solution has been found.

The object of the present invention is to provide a solution to the above mentioned problem and, to that end, is characterized in that at least one of the films forming the film flap(s) is provided with one or more incisions which are made near the closure seams or in that in the vicinity of the closure seams a part of the films forming the film flap(s) is cut away.

Forming incisions allows the undesired stresses to be eliminated and any creases and the like in the film flap(s) at the location where encapsulating material is delivered during use to be avoided.

The number of incisions is not particularly limited, but it is preferable for the incisions to be formed in such a manner that at least that part of the film flap through which the encapsulating material is delivered during use is made stress-free.

In particular, the packaging has an elongate shape and the closure seams are situated in the vicinity of its ends. Such an elongate packaging is known in the prior art as a "pencil". In this case the invention provides a very successful and simple solution for eliminating the induced stress without having to change the conventional way of producing these packagings.

Particularly in the case of an elongate packaging, each film flap is provided with an incision in the vicinity of each closure seam.

An elongate packaging may comprise one or, preferably, two film flaps. In the latter case, it is advantageous to dispose the incisions in substantially symmetrical places with respect to the principal axis of the packaging.

In a particularly preferred embodiment of the invention, a section of the film flap is removed by incision in the vicinity of each closure seam, on both sides thereof. The shape of the section which is removed is not particularly critical, but will often be substantially quadrangular. All this will be explained in more detail below with reference to the description of the figures.

The production of the packaging is for example made according to the following steps:
1. Cutting a strang of extruded encapsulating material into pieces.
2. Wrapping a sheet of film around such a piece of encapsulating material forming thereby an Ω-shaped oblong container and at least one film flap.
3. Covering the film flap(s) with a second sheet of film and connecting the two films together by two film seams which extend along the opening of the container from one lateral end to the other, closing thus the top side of the container.
4. Making incisions in the film flap(s) in at least one of the two films in the vicinity of the lateral ends or removing a part of the film flap(s) in the vicinity of the lateral ends.
5. Sealing the lateral ends of the container with two closure seams up to a predetermined height and bending the film to form either one or two film flaps.

The way in which the packaging is produced is not critical. The incisions could also be made in the film sheets before making the packaging or the closure seams can be made before the film seams are made.

The invention is explained in more detail below with reference to the appended drawing, in which:
- Fig. 1: shows a perspective view of the packaging according to the invention;
- Fig. 2: shows a perspective view of a first, folded film;
- Fig. 3: shows a perspective view of an extruded, elongate volume of encapsulating material;
- Fig. 4: shows a perspective view of a second film;
- Fig. 5: shows a side view of the packaging according to the invention with film flaps folded upwards;
- Figs. 6a-c: show three possible embodiments of incisions according to the invention; and
- Fig. 7: shows a perspective view of the packaging where the film flaps are joined together by further sealing points.

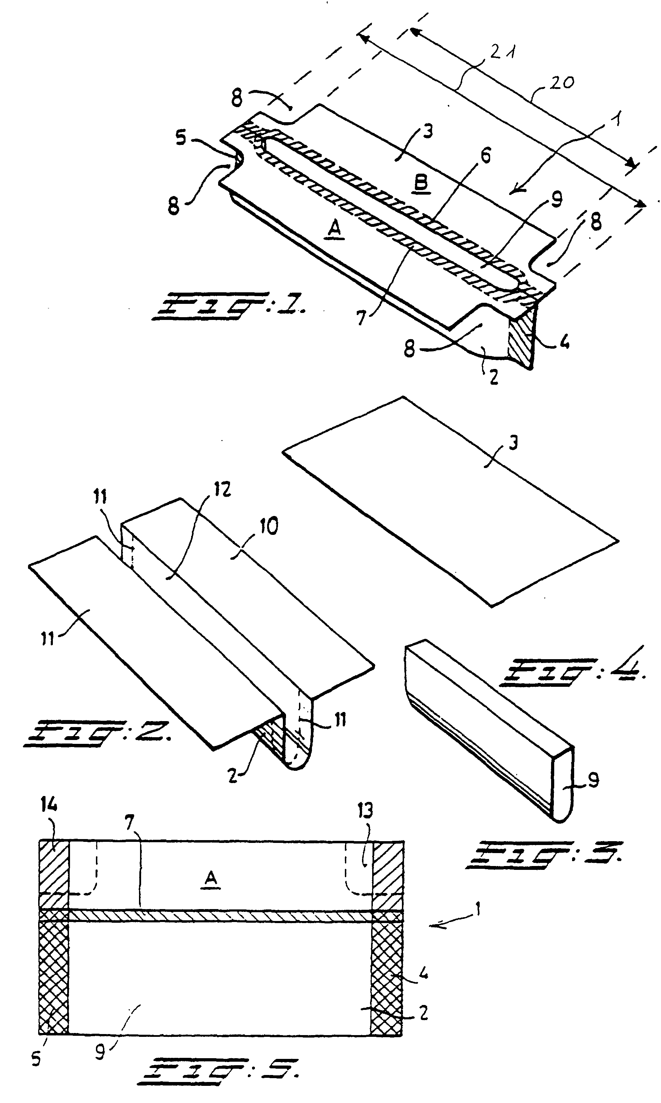

Fig. 1 shows packaging 1 according to the invention comprising a first film 2 and a second film 3 which form a container. The first film 2 has the shape of an Ω. The first film 2 and the second film 3 are joined together with the aid of two film seams 6 and 7. End parts of the first film 2 are sealed together by closure seams 4 and 5. The films 2 and 3 wrap an elongate volume of encapsulating material 9 and form two film flaps A and B through which, during molding, the encapsulating material flows out of the packaging 1 into the runners of the mold.

The locations indicated by 8 clearly indicate locations where a quantity of film material has been removed from each corner of the film flaps A and B. It is not absolutely necessary to remove a quantity of film material, but it is preferred.

The film material which is used to make the packaging 1 preferably consists of two layers. The first layer is a for example a PET foil and the second layer is a layer of amorphous PET (α-PET). The first layer has a thickness of about 30 µm and a melting temperature above 220°C, whereas the second layer has a thickness of about 3 µm and becomes sticky at a temperature of about 110°C. The film seams 6 and 7 as well as the closure seams 4 and 5 can be made by pressing the films 2 and 3 with their α-PET layers facing each other against each other with the aid of a stamp heated to about 120°C. The film seams 6, 7 can thus be opened again without damage after they have been formed: they are sealable and peelable. Suitable films are also known from the European patent EP 370'564.

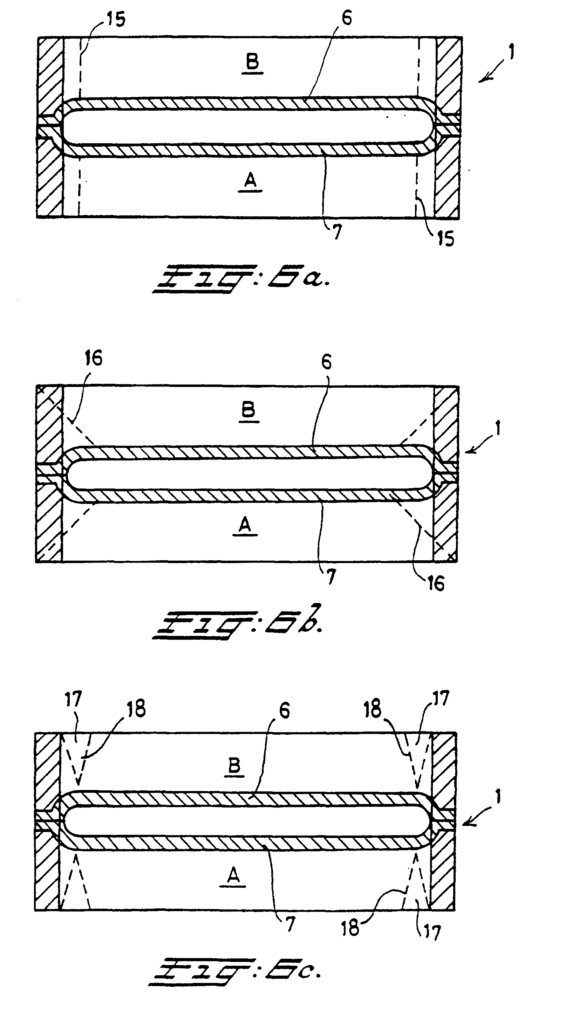

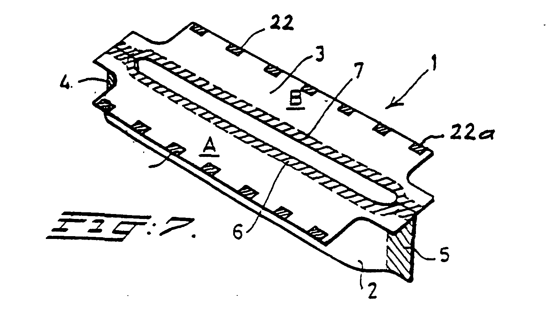

Fig. 2 shows the first film 2 which is a sheet of film folded to an Ω-shape and formed with two film parts 10 and 11 which are used to produce the lower parts of the film flaps A and B. Fig. 4 shows the second film 3 which is a rectangular sheet of film which is used to cover the folded first film 2 of Fig. 2 and to produce the upper parts of the film flaps A and B. In Fig. 2, dashed lines 11 indicate the locations where the closure seams 4, 5 are to be formed.

Fig. 3 shows a perspective view of an elongate volume of encapsulating material 9 which is intended to be accommodated in the packaging 1 produced with the aid of film 2 from Fig. 2 and film 3 from Fig. 4. An elongate volume of encapsulating material 9 can be produced, for example, by extrusion.

The way in which the packaging is produced is not particularly critical and may take a wide variety of forms.

Preferably, the encapsulating material is extruded as a continuous strand and the first film 2 is formed to the form shown in Fig. 2 and wrapped around a cutted piece of the strand leaving an opening 12 between the parts 10 and 11. Then, the second film 3 is placed on the parts 10 and 11 so as to close off the opening 12. Then the film seams 6 and 7 and the closure seams 11 are made. The closure seams 11 can be made before or after the film seams 6 and 7 have been formed. Making seams is intended to mean any way of forming seams, for example including adhesive bonding with the aid of an adhesive, heat-sealing, hot-melt welding, ultrasonic welding, etc.

The closure seams 4, 5 are often made in the way shown in Fig. 5. In other words, after the film seams 6 and 7 have been made, the sections 13 and 14 around the corners of the film flaps A and B are removed by cutting or punching in order to form the final shape of the film flaps A and B. Then the film flaps A and B are folded upwards, after which the closure seams 4 and 5 are made, which seams in this case therefore extend beyond the film flaps A and B. This method ensures that the encapsulating material 9 is successfully enclosed in the packaging 1. The shape of the film flaps A and B is characterized in that the length of the border 20 of the film flaps A and B, which runs parallel to the film seams 4 and 5, is shorter than the distance 21 between the two closure seams 4 and 5.

Instead of cutting and removing a part of the film flaps A and B it is also possible to make only incisions into the film flaps A and B, as shown in Figs. 6a and 6b. Furthermore, it is possible to provide one or both of the films 2 and 3 with the cutouts or incisions before the packaging is produced.

Figs. 6a-c show three embodiments of incisions for use in the packaging 1 according to the invention. These incisions are shown in packagings which are substantially in accordance with the preceding figures.

Fig. 6a shows incisions 15 which are substantially perpendicular to the film seams 6, 7.

In Fig. 6b, in a different embodiment, the incisions 16 extend from the corners of the film flaps A, B at an angle of approximately 45° to the principal axis of the packaging 1.

As will be clear from the above description, incisions also may include the removal of material. In Fig. 6c, incisions 18 are formed in such a manner that wedge-shaped sections 17 are removed from the film flaps A, B.

Preferably the incisions or cutouts are made in both films 2, 3 (Fig. 1) of the film flaps A, B. It is possible, however, to provide only one of the films 2, 3 with incisions or cutouts.

Fig. 7 shows packaging 1 having additional connection points 22 where the two films 2 and 3 of the film flaps A and B are optionally joined together. The connection points 22 are arranged along the edge of the film flaps A and B. They are preferably made in the same way as the film seams 6 and 7. The connection points 22 prevent the film flaps A and B from opening and curling when the packaging 1 is placed into the heated mold. Connection points 22a are preferably located near the corners of the film flaps A and B. Because the films 2 and 3 reopen at the connection points 22 and 22a at typical mold temperatures of 180°C they have no negative impact on the transfer molding process itself, even if some of them are accidentally placed in a runner. Instead of connecting the film flaps A and B together at points 22 only they could of course be joined together along connection lines.

## Claims

1. Packaging comprising two films (2, 3) wrapping a volume of encapsulating material (9), wherein parts of the first film (2) are sealed together by two closure seams (4, 5), wherein the two films (2, 3) are joined together by film seams (6, 7) which extend along from one closure seam (4, 5) to the other, and wherein the films (2, 3) form at least one two-layer film flap (A; B), **characterized in that** in the film flap(s) (A; B) at least one of the films is provided with one or more incisions (8; 15, 16, 18) located in the vicinity of at least one of the closure seams (4, 5) or **in that** the oblong border (20) of the film flaps (A; B) is shorter than the distance (21) between the two closure seams (4, 5).

2. Packaging according to claim 1, **characterized in that** it has an elongate shape and **in that** incisions (8; 15, 16, 18) are located in both films (2, 3).

3. Packaging according to claim 1 or 2, **characterized in that** the films (2, 3) are joined together at connection points (22) or with connection lines which are arranged along the edges of the film flaps (A; B).

4. Use of the packaging according to at least one of the preceding claims in order to encapsulate electronic components.

## Patentansprüche

1. Verpackung, die zwei filmartige Lagen (2, 3) aufweist, die ein Volumen eines einzukapselnden Materials (9) umschließen, wobei Teile der ersten Lage (2) mittels zweier Verschlußnähte (4, 5) miteinander versiegelt sind, wobei die beiden Lagen (2, 3) miteinander mittels Film-Nähten (6, 7) verbunden sind, die sich von der einen Verschlußnaht (4, 5) zu der anderen erstrecken, und wobei die Lagen (2, 3) wenigstens eine Zwei-Lagen-Film-Lasche (A; B) bilden,
**dadurch gekennzeichnet,**
**daß** bei der Film-Lasche bzw. den Film-Laschen (A; B) wenigstens eine der Lagen mit einem oder mehreren Einschnitten (8; 15, 16, 18) versehen ist, die benachbart von wenigstens einer der Verschlußnähte (4, 5) angeordnet sind, oder daß die Rechteck-Seite (20) der Film-Laschen (A; B) kürzer ist als die Distanz (21) zwischen den beiden Verschlußnähten (4, 5).

2. Verpackung nach Anspruch 1,
**dadurch gekennzeichnet,**
**daß** sie eine längliche Form hat, und daß die Einschnitte (8; 15, 16, 18) in beiden filmartigen Lagen (2, 3) angeordnet sind.

3. Verpackung nach Anspruch 1 oder 2,
**dadurch gekennzeichnet,**
**daß** die filmartigen Lagen (2, 3) miteinander an Verbindungspunkten (22) oder entlang von Verbindungslinien miteinander verbunden sind, die längs der Kanten der Filmlaschen (A; B) angeordnet sind.

4. Verwendung der Verpackung nach wenigstens einem der vorangehenden Ansprüche, zur Einkapselung von Elektronikkomponenten.

## Revendications

1. Conditionnement comprenant deux feuilles minces (2,3) emballant un volume de matériau à enrober (9), dans lequel des portions de la première feuille mince (2) sont scellées ensemble par deux joints de fermeture (4 ,5), dans lequel les deux feuilles minces (2,3) sont jointes ensemble par des joints de feuille mince (6,7) qui s'étendent d'un joint de fermeture (4,5) à l'autre, et dans lequel les feuilles minces (2,3) forment au moins un rabat de feuille mince à deux couches (A ; B), **caractérisé en ce qu'**au niveau du (des) rabat(s) (A ; B), au moins une des feuilles minces est prévue avec une ou plusieurs incisions (8 ; 15,16,18) situées à proximité d'au moins un des joints de fermeture (4,5) ou **en ce que** le bord oblong (20) des rabats de feuille mince (A ; B) est plus court que la distance (21) entre les deux joints de fermeture (4,5).

2. Conditionnement selon la revendication 1, **caractérisé en ce qu'**il a une forme allongée et **en ce que** les incisions (8 ; 15,16,18) sont situées sur les deux feuilles minces (2,3).

3. Conditionnement selon la revendication 1 ou 2, **caractérisé en ce que** les feuilles minces (2,3) sont reliées ensemble en des points de connexion (22) ou avec des lignes de connexion qui sont disposées le long des bords des rabats de feuille mince (A ; B).

4. Utilisation du conditionnement selon au moins l'une des revendications précédentes, afin d'emballer des composants électroniques.
